# EUROPEAN PATENT APPLICATION

(11) **EP 3 130 658 A1**
(43) Date of publication of application: **15.02.2017**
(21) Application number: 15770153.3
(22) Date of filing: 25.03.2015
(51) Int. Cl.: C12G 1/02, A23L 27/00, A23L 27/12, A23L 2/02, C12G 3/02

(54) **CONCENTRATED GRAPE JUICE WITH RICH FLAVOR, AND PRODUCTION METHOD THEREFOR**

(30) Priority: 26.03.2014 JP 2014064780; 10.02.2015 JP 2015024419
(71) Applicant: MERCIAN CORPORATION, Tokyo 164-0001 (JP)
(72) Inventor: YASUI Takashi, Tokyo 164-0001 (JP); SUZUKI Katsuhiko, Tokyo 164-0001 (JP)
(74) Representative: ABG Patentes, S.L.
(86) International application number: PCT/JP2015/059181
(87) International publication number: WO 2015/147074

(57) **Abstract**

A method for manufacturing grape juice in which muscat aroma is emphasized is disclosed. The method comprises step (a) and step (b), or comprises step (a), step (b) and step (c): (a) obtaining fruit skin or fruit skin-containing fruit juice by crushing and squeezing grape berries; (b) heating a material formed by adding water to the fruit skin obtained in step (a) or the fruit skin-containing fruit juice obtained in step (a), wherein the temperature of the material or the fruit juice is elevated to reach 45°C to 95°C to form a mixture; (c) air-cooling the mixture obtained in step (b) and subsequently adding an enzyme having a glycosidase activity for diglycoside to the mixture. By using grape juice which is manufactured according to this method as a raw material, wine having rich muscat aroma can be manufactured.

## Description

### FIELD OF THE INVENTION

The present invention relates to a concentrated grape juice having rich flavor and a method for manufacturing the same.

### BACKGROUND OF THE INVENTION

Transporting grape berries to be used as the raw material of wine in the form of concentrated grape juice has a merit of drastically reducing the transportation cost. However, the concentrated grape juice has a demerit of fragrance reduction caused by degradation or evaporation of the aroma components during the concentration step of the grape juice.

Monoterpene alcohol is known to be an important aroma component for characterizing muscat wine. The monoterpene alcohols in grape berries are present in two forms of a free type and a bonded type. The bonded type monoterpene alcohol is also referred to as monoterpene alcohol glycoside.

The monoterpene alcohol glycoside is a glycoside in which glucose is bonded to monoterpene alcohol, and is non-volatile monoterpene alcohol. The monoterpene alcohol glycoside itself has no smell. However, when wine is brewed, the enzyme or β-glucosidase of the yeast converts the monoterpene alcohol glycoside to the free type. This free type contributes to the distinctive aroma of muscat wine. It is known that the monoterpene alcohol glycoside is present either in the form of a monoglycoside type or a diglycoside type. In the monoglycoside type, only one glucose is bonded to the monoterpene alcohol. On the other hand, in the diglycoside type, one glucose is bonded to the monoterpene alcohol, and any one of arabinose, rhamnose, and apiose is bonded to this glucose.

As an attempt for manufacturing fermented alcoholic beverage having muscat-like favorable aroma, Japanese Unexamined Patent Application Publication No. 2002-238572 (Patent Document 1) describes a method of manufacturing sake using a yeast mutant which produces monoterpene alcohol.

As an attempt for improving the aroma of the concentrated grape juice, Japanese Unexamined Patent Application Publication No. 2005-110556 (Patent Document 2) describes a method for reducing unpleasant odor caused by sulfurous acid that is added for stabilizing grape juice.

However, there are no reports of manufacturing fermented alcoholic beverage or concentrated grape juice having enhanced muscat-like aroma without using yeast mutant in the fermentation.

### SUMMARY OF THE INVENTION

An object of the present invention is to provide grape juice that enables manufacturing wine having rich muscat aroma, and to provide a method for manufacturing the same grape juice.

The present inventors have found, in a process of manufacturing grape juice, that a heat treatment of fruit skin or fruit skin-containing fruit juice from grape berries under predetermined conditions increases the content of the monoterpene alcohol glycoside, and that the grape juice produced in this way exhibits enhanced muscat aroma and improved quality of the muscat aroma. Furthermore, the present inventors have found that by manufacturing wine using the grape juice produced in this way as a raw material, rich muscat aroma can be imparted to the manufactured wine. The present invention is based on these findings.

The present invention encompasses the following inventions.
(1) A grape juice comprising monoterpene alcohol glycoside, wherein a total amount of the monoterpene alcohol glycoside is equal to or more than 7 nM expressed in Brix 20 equivalence.
(2) The grape juice according to (1), wherein a total amount of a monoglycoside among the monoterpene alcohol glycoside is equal to or more than 2 nM expressed in Brix 20 equivalence.
(3) The grape juice according to (2), wherein a concentration of geranyl glycoside among the monoglycoside is equal to or more than 0.9 nM, a concentration of linalyl glycoside among the monoglycoside is equal to or more than 0.4 nM, and a concentration of β-citronellyl glycoside among the monoglycoside is equal to or more than 0.2 nM, all expressed in Brix 20 equivalence.
(4) A method for manufacturing grape juice in which muscat aroma is emphasized, comprising step (a) and step (b), or comprising step (a), step (b) and step (c):
   (a) obtaining fruit skin or fruit skin-containing fruit juice by crushing and squeezing grape berries;
   (b) heating a material formed by adding water to the fruit skin obtained in step (a) or the fruit skin-containing fruit juice obtained in step (a), wherein the temperature of the material or the fruit juice is elevated to reach 45°C to 95°C to form a mixture;
   (c) air-cooling the mixture obtained in step (b) and subsequently adding an enzyme having a glycosidase activity for diglycoside to the mixture.
(5) Grape juice which is manufactured by the method according to (4).
(6) A beverage which is manufactured from the grape juice according to any of (1) to (3) or the grape juice according to (5).
(7) The beverage according to (6), wherein the beverage is a fermented alcoholic beverage.
(8) A flavor-imparting agent for imparting muscat aroma, comprising the grape juice according to any of (1) to (3) or the grape juice according to (5).
(9) A beverage, comprising the grape juice according to any of (1) to (3), the grape juice according to (5), or the flavor-imparting agent according to (8).
(10) The beverage according to (9), wherein the beverage is a fermented alcoholic beverage.

According to the present invention, provided is grape juice in which the muscat aroma is emphasized. Using this grape juice as a raw material enables manufacturing wine having rich muscat aroma. Thus-manufactured wine has complex muscat-like aroma. Furthermore, adding the grape juice according to the present invention enables imparting the rich muscat aroma to the beverage (fermented alcoholic beverage, non-alcoholic beverage, or the like).

### DETAILED DESCRIPTION OF THE INVENTION

In the method for manufacturing the grape juice according to the present invention, performing the crushing-squeezing step (a) and the heat treatment step (b) increases the concentration of the monoterpene alcohol glycoside contained in the fruit juice. Thus, it is possible to obtain the grape juice in which preferable muscat aroma is markedly enhanced. The enzymatic treatment step (c) may be performed after step (b).

The term "monoterpene alcohol" as used herein means free monoterpene alcohol, unless otherwise indicated. The free monoterpene alcohol is not bonded with glucose and is volatile. the free monoterpene alcohol includes geraniol, linalool, α-terpineol, β-citronellol, nerol and the like. On the other hand, the term "monoterpene alcohol glycoside" means glycoside in which the free monoterpene alcohol is bonded with glucose. This bonded monoterpene alcohol is non-volatile.

The term "monoglycoside (type)" as used herein means a monoterpene alcohol glycoside in which only one glucose is bonded to the monoterpene alcohol. On the other hand, the term "diglycoside (type)" means a monoterpene alcohol glycoside in which one glucose is bonded to the monoterpene alcohol and any one of arabinose, rhamnose and apiose is further bonded to the glucose.

The term "total amount of the monoterpene alcohol glycoside" as used herein means the total amount of linalyl glycoside, α-terpinyl glycoside, β-citronellyl glycoside, neryl glycoside and geranyl glycoside.

The term "total amount of the monoglycoside" as used herein means the total amount of monoglycoside type linalyl glycoside, monoglycoside type α-terpinyl glycoside, monoglycoside type β-citronellyl glycoside, monoglycoside type neryl glycoside and monoglycoside type geranyl glycoside. In other words, the total amount of the monoglycoside is the total amount of linalyl glucoside, α-terpinyl glucoside, β-citronellyl glucoside, neryl glucoside and geranyl glucoside.

The term "Brix" as used herein means a value of a liquid measured by a Brix saccharimeter (refractometer), which is a numerical value indicated on the basis of the sucrose concentration. In other words, the Brix is a numerical value indicating the sucrose concentration based on the assumption that the solute in the liquid is sucrose only. The Brix is one of the most general numerical values used as an index indicating the sugar content of a liquid, and is often used for indicating especially the sugar content of a liquid containing sugar that is a raw material for alcoholic fermentation.

The term "a value equivalent to Brix 20" as used herein means a quantitative value at a concentration at which the sugar content of the sample is adjusted to 20 degrees expressed in the Brix index.

The term "ppb" as used herein indicates the concentration expressed in terms of weight/volume (w/v).

The term "fermented alcoholic beverage" as used herein means an alcohol (ethanol)-containing beverage manufactured by microbial alcoholic fermentation. The fermented alcoholic beverage includes various beverages, such as fermented liquor and distilled liquor using cereals as raw materials, fruit wine, and distilled liquor obtained by distillation of the fruit wine. According to a preferable embodiment of the present invention, the fermented alcoholic beverage according to the present invention is fruit wine, more preferably grape wine (wine).

In the crushing-squeezing step of step (a), grape berries are crushed and squeezed to obtain fruit skin or fruit juice containing the fruit skin (a mixture of the fruit skin and the fruit juice), preferably only fruit skin. For the variety of grape, it is preferable to use a grape variety having muscat-like aroma. Such a variety includes, for example, Muscat of Alexandria, Neo-muscat and the like. It is preferable to use Muscat of Alexandria variety. The harvesting season of grapes is not particularly restricted. It is possible to use grape berries harvested in a normal season for manufacturing wine, for example, in a season when the berries have a sufficient sugar content and sufficient aroma.

The heat treatment in step (b) is performed by heating a mixture of fruit skin and water or the fruit skin-containing fruit juice (a mixture of the fruit skin and the fruit juice) to a predetermined temperature higher than room temperature. In the present specification, it has been confirmed that the amount of monoterpene alcohol glycoside extracted from the grape skin after this heating treatment becomes sufficient when the heating is performed to 45°C to 95°C, in particular to 65°C to 95°C. Furthermore, in the present specification, it has been confirmed that the results of sensory evaluation of the wine produced using the grape juice obtained is good when the heating is performed to 45°C to 95°C, especially to 65°C to 85°C. Thus, the temperature of the mixture of the fruit skin and water or the fruit skin-containing fruit juice is raised to 45°C to 95°C, preferably to 65°C to 95°C, and more preferably to 65°C to 85°C in the heat treatment. The heating is stopped immediately after the temperature of the mixture of the fruit skin and water or the fruit skin-containing fruit juice is elevated to the temperature described above.

The enzymatic treatment in step (c) which is an optional step is performed after step (b) by treating the mixture of the fruit skin and water or the fruit skin-containing fruit juice (the mixture of fruit skin and fruit juice) using an enzyme having the glycosidase activity for the diglycoside. In this enzymatic treatment, the enzyme is added, after the mixture of the skin and water or the fruit skin-containing fruit juice is cooled down, preferably when the temperature is at 10°C to 55°C, and more preferably at about 50°C. The enzyme used in the enzymatic treatment is an enzyme having the glycosidase activity for the diglycoside, preferably an enzyme which is confirmed to be safe as a food. Such an enzyme include various enzymes known in the art, for example, AR2000 (DSM), Rapidase (registered trademark), Expression (DSM), Lallzyme Cuvee Blanc (registered trademark), Lallzyme Beta (registered trademark) (LALLEMAND), Rohapect (registered trademark) MAX, ROHALASE (registered trademark) BXL, ROHALASE (registered trademark) BX, ROHAVIN (registered trademark) MX, ROHAVIN (registered trademark) VR-X (AB enzyme), Ultrazym EX-L (Novozymes) and the like. Preferably, AR2000 is used. One of ordinary skill in the art can appropriately select the time for the enzymatic treatment, so as to adjust the concentration of the monoterpene alcohol glycoside in the fruit juice to be within a favorable range.

After the completion of step (b) or step (c), several operations such as skin contact, squeezing, clarification, and concentration are appropriately performed to obtain the grape juice. Since the mixture obtained by step (b) or step (c) contains the fruit skin, it is preferable to perform at least the operation of squeezing.

The grape juice which is manufactured by the manufacturing method according to the present invention has enhanced and favorable muscat aroma, and is an aspect of the present invention.

Furthermore, in the present specification, it is found, according to the quantification of the aroma component in the grape juice manufactured by the above manufacturing method, that the above-described favorable muscat aroma is achieved by the total amount of monoterpene alcohol glycoside, further, by the total amount of the monoglycoside type monoterpene alcohol glycoside, and further by the contents of geranyl glycoside, linalyl glycoside, and β-citronellyl glycoside among the monoglycoside type monoterpene alcohol glycoside.

Thus, according to another aspect of the present invention, provided is a grape juice comprising monoterpene alcohol glycoside, in which the total amount of the monoterpene alcohol glycoside is equal to or more than 7 nM, preferably 11 nM, more preferably 15 nM, furthermore preferably 25 nM, expressed in Brix 20 equivalence. Although the upper limit of the total amount of the monoterpene alcohol glycoside is not particularly defined, the upper limit is preferably 200 nM, further preferably 100 nM. Furthermore, in a preferable embodiment of the present invention, the total amount of the monoglycoside among the monoterpene alcohol glycoside in the grape juice is equal to or more than 2 nM, more preferably 5 nM, expressed in Brix 20 equivalence. Although the upper limit of the total amount of the monoglycoside is not particularly defined, the upper limit is preferably 60 nM, more preferably 30 nM. In a further preferable embodiment of the present invention, the concentration of geranyl glycoside is equal to or more than 0.9 nM, the concentration of linalyl glycoside is equal to or more than 0.4 nM, and the concentration of β-citronellyl glycoside is equal to or more than 0.2 nM, all expressed in Brix 20 equivalence, among the monoglycoside in the grape juice. Especially, the content of monoglycoside type linalyl glycoside is preferably equal to or more than 1.0 nM, more preferably 1.5 nM, furthermore preferably 2.0 nM, expressed in Brix 20 equivalence. Although the upper limit of the contents of these monoglycosides are not particularly defined, it is preferable that the upper limit of geranyl glycoside is 50 nM, the upper limit of linalyl glycoside is 30 nM, and the upper limit of β-citronellyl glycoside is 10 nM.

The content of free monoterpene alcohol in a liquid (content of each monoterpene alcohol or total amount of them) can be measured by a gas chromatography-mass spectrometer (GC/MS). For example, monoterpene alcohol can be extracted using dichloromethane and then can be quantitatively determined by the GC/MS. As the internal standard material, 4-nonanol can be used. The analytical conditions for the GC/MS are shown in Table 1 below.

The quantification of monoterpene alcohol glycoside in a liquid can be performed in reference to J. Inst. Brew. 116 (1), 77-70, 2010. For example, that Sep-Pak plus (Waters) is used to separate free monoterpene alcohol and monoterpene alcohol glycoside, the monoterpene alcohol glycoside obtained is converted to free monoterpene alcohol by using enzyme AR 2000 (DSM) or β-Glucosidase from almonds (SIGMA), and then the free monoterpene alcohol can be quantified by using the GC/MS described above. Here, the amount of the free monoterpene alcohol obtained by converting the monoterpene alcohol glycoside by using the β-Glucosidase from almonds (SIGMA) is referred to as the value of monoglycoside type monoterpene, the amount of the free type monoterpene alcohol obtained by converting the monoterpene alcohol glycoside by using the enzyme AR 2000 (DSM) is referred to as the sum of monoglycoside type and diglycoside type, and the amount obtained by substracting the amount of the free monoterpene obtained by conversion using β-Glucosidase from the amount of the free monoterpene obtained by conversion using AR 2000 is referred to as the amount of diglycoside type. Thus, it is possible to quantitatively determine the monoglycoside type and the diglycoside type.

The grape juice having a predetermined concentration of monoterpene alcohol glycoside according to the present invention may be manufactured by the manufacturing method according to the present invention, or may be manufactured by adding monoterpene alcohol glycoside, especially monoglycoside type monoterpene alcohol glycoside, such as monoglycoside type geranyl glycoside, linalyl glycoside, and β-citronellyl glycoside, to grape juice so as to adjust their concentration to be within the ranges described above.

The grape juice can be used for manufacturing a beverage, directly or after diluted or concentrated. Thus, according to another aspect of the present invention, there is provided a beverage which is manufactured from the grape juice which is obtained by the manufacturing method according to the present invention, or the grape juice comprising monoterpene alcohol glycoside in a predetermined concentration according to the present invention. The type of beverage is not particularly restricted, insofar as the beverage is manufactured using the grape juice as a raw material. In addition, one of ordinary skill in the art can appropriately manufacture such beverage in accordance with the type of beverage.

In a preferable embodiment of the present invention, the beverage is a fermented alcoholic beverage. The grape juice obtained by the manufacturing method according to the present invention, and the grape juice comprising the monoterpene alcohol glycoside in a predetermined concentration according to the present invention can be used for manufacturing the fermented alcoholic beverage, directly or after the sugar content is adjusted by dilution or concentration. For example, grape wine (wine) can be manufactured by the conventional method well known in this technical field. The yeast used for the fermentation process can be the yeast used for the industrial wine manufacture, such as VIN13, EC1118, BM45, 285, and DV10.

The grape juice obtained by the manufacturing method according to the present invention and the grape juice comprising monoterpene alcohol glycoside in the predetermined concentration according to the present invention can be used for imparting muscat aroma to a different food or beverage. Therefore, another aspect of the present invention provides a flavor-imparting agent that contains these grape juices used for imparting muscat aroma. The flavor-imparting agent according to the present invention can be added to various foods or beverages.

The grape juice obtained by the manufacturing method according to the present invention, the grape juice comprising monoterpene alcohol glycoside in the predetermined concentration according to the present invention, and the flavor-imparting agent according to the present invention can impart favorable muscat aroma to a beverage when added to the beverage. Therefore, according to another aspect of the present invention, provided is a beverage comprising these grape juices or the flavor-imparting agent. The beverage is preferably a fermented alcoholic beverage.

### Examples

### Analysis protocol 1: Quantification of free type monoterpene alcohol

Free type monoterpene alcohol was extracted using dichloromethane, and the quantification was performed by the GC/MS.

Specifically, 50 µL of the internal standard material, 4-nonanol (105 ppm) was first added to 5 mL of the sample and then 500 µL of dichloromethane was further added to the sample. The resultant solution was sufficiently stirred (Vortex for 1 min), and then the dichloromethane fraction was recovered. Next, 500 µL of dichloromethane was added to the remaining aqueous phase, the resultant mixture was satisfactorily stirred (Vortex 1 min), and then the dichloromethane fraction was recovered. The two dichloromethane fractions obtained were combined to obtain about 1 mL of dichloromethane fraction. Anhydrous sodium sulphate was added to the dichloromethane fraction obtained to dehydrate it, and then the resultant fraction was subjected to the GC/MS analysis. Based on the comparison with the internal standard material, the amount of free monoterpene alcohol in the sample was calculated. The analytical conditions for the GC/MS are shown in Table 1 below.
[Table 1]

**Table 1: Analytical Conditions for GC/MS**

| | | |
|---|---|---|
| GC/MS : | Agilent 5975 | |
| Column : | BP-20 (50 m × 0.22 mm × 0.25 µm) | |
| Flow rate : | 1 mL/min constant flow | |
| Split ratio : | 10:1 (TDU splitless, CIS split) | |
| Heating condition: | 60°C 3 min hold → (3°C/min) → 245°C 10 min hold | |
| Measuring mode : | SIM mode | |
| Selected ion : | Linalool | m/z = 71 (Target ion), 93, 121 |
| | α-terpineol | m/z = 93 (Target ion), 121, 136 |
| | β-citronellol | m/z = 69 (Target ion), 81, 95 |
| | Nerol | m/z= 69 (Target ion), 93, 121 |
| | Geraniol | m/z = 69 (Tarqet ion), 93, 123 |

### Analysis protocol 2: Quantification of monoterpene alcohol glycoside

Monoterpene alcohol glycoside is glycoside in which glucose is bonded to monoterpene alcohol, and is non-volatile monoterpene alcohol. It is known that the monoterpene alcohol glycoside are present as the monoglycoside type or the diglycoside type. In the monoglycoside type, only one glucose is bonded to monoterpene alcohol. On the other hand, in the diglycoside type, one glucose is bonded to monoterpene alcohol, and any one of arabinose, rhamnose, and apiose is further bonded to the glucose.

The quantification of monoterpene alcohol glycoside was performed with reference to J. Inst. Brew. 116(1), 77-70, 2010. Namely, Sep-Pak plus (Waters) was used to separate free monoterpene alcohol and monoterpene alcohol glycoside, wherein the monoterpene alcohol glycoside obtained was converted to free monoterpene alcohol by enzyme AR2000 (DSM) or β-Glucosidase from almonds (SIGMA), and the free monoterpene alcohol obtained was quantitatively determined by the GC/MS under the above conditions. Here, the amount of the free type monoterpene alcohol obtained by converting the monoterpene alcohol glycoside by using the β-Glucosidase from almonds (SIGMA) is referred to as the value of monoglycoside type monoterpene, the amount of the free monoterpene alcohol obtained by converting monoterpene alcohol diglycoside by using the enzyme AR 2000 (DSM) is referred to as the sum of monoglycoside type and diglycoside type, and the amount obtained by subtracting the amount of free monoterpene obtained by conversion using the β-Glucosidase from the amount of the free monoterpene obtained by conversion using AR 2000 is referred to as the amount of diglycoside type. Thus it is possible to quantitatively determine the monoglycoside type and the diglycoside type. The specific procedure is shown by the following (1) to (3).

### (1) Separation of monoterpene alcohol glycoside

The separation of monoterpene alcohol glycoside was performed by using Sep-Pak C18 Plus Cartridge (hereinafter, called as "Sep-Pak"). The treatment using Sep-Pak was performed by using Visiprep TM DL type SPE vacuum manifold.
(a) For the pretreatment of Sep-Pak, 10 mL of MeOH was passed through Sep-Pak and then 20 mL distilled water was passed through Sep-Pak to equilibrate Sep-Pak.
(b) A sample (fruit juice) was centrifuged at 8,000 rpm for 10 min, and 5 mL of the supernatant was passed through the Sep-Pak.
(c) A 20 mL aliquot of distilled water was passed through Sep-Pak, and then 10 mL of pentane was passed through Sep-Pak, to elute free type monoterpene alcohol.
(d) Again 10 mL of distilled water was passed through Sep-Pak, and Set-Pak was put in a 50 mL tube and centrifuged in order to remove water as much as possible.
(e) A methanol fraction containing eluted monoterpene alcohol glycoside was obtained by passing 10 mL of methanol through Sep-Pak.

### (2) Conversion of monoterpene alcohol glycoside to free type monoterpene alcohol by enzyme reaction

(f) Nitrogen was blown to the methanol fraction obtained by step (e), and methanol was concentrated to have a volume of several hundreds of µL.
(g) The concentrated methanol solution was filled up to 5.0 mL by adding 0.1 M citrate buffer (pH 3.5) containing β-glucosidase from almonds (SIGMA) at 1.0 g/L (for quantification of monoglycoside type). Separately, a concentrated methanol solution was filled up to 5.0 mL by adding 0.1 M citrate buffer (pH 3.5) containing AR 2000 at 1.0 g/L (for quantification of the total amount of monoterpene alcohol glycoside). For preparing the above-described 0.1 M citrate buffer (pH 3.5), 500 mL of 0.1 M citric acid monohydrate and 220 mL of 0.1 M trisodium citrate dihydrate were mixed and the pH was adjusted to 3.5.
(h) The solution obtained by the above step (g) was put in an airtight container, and the enzyme reaction was performed on the solution in a thermostat chamber at 40°C for 13 to 20 hours, so as to decompose the monoterpene alcohol glycoside to free monoterpene alcohol.

### (3) Quantification of free monoterpene alcohol in enzyme-reaction solution

(i) As the internal standard material, 50 µL of 4-nonanol (105 ppm) was added to the solution of the above step (h) in which the enzyme reaction was completed.
(j) After adding 500 µL of dichloromethane to the solution of the above step (i), the resultant solution was sufficiently stirred (Vortex for 1 min), and then the dichloromethane fraction was recovered. This process was performed again, and about 1 mL of the dichloromethane fraction was obtained.
(k) Anhydrous sodium sulfate was added to the dichloromethane fraction for dehydration, and then the resultant fraction was subjected to a GC/MS analysis.
(1) The amount of free monoterpene alcohol in the enzyme-reaction solution was calculated based on the comparison with the internal standard material.
(m) The concentration (nM) of bonded terpene in a sample was replaced with the terpene concentration (nM) in 5 mL of an enzyme-reaction solution obtained from 5 mL of a sample.

### Analysis protocol 3: Sensory evaluation

The sensory evaluation was performed by five specialized panelists.

### Example 1: Preparation of sample berries

The grape of Muscat of Alexandria variety was used to prepare a sample of concentrated grape juice. The specific procedure is as follows.

### (1) Method using grape juice and skin

Experimental section 1: The grape berries were crushed to obtain fruit skin-containing fruit juice, and the fruit skin-containing fruit juice was heated to 85°C and then cooled to 50°C. A sequence of the following operations was performed on the resultant mixture: skin contact for 5 hours, squeezing, clarification, and concentration.

Experimental section 2: The grape berries were crushed to obtain fruit skin-containing fruit juice, and the fruit skin-containing fruit juice was heated to 85°C and then cooled to 50°C. A sequence of the operations was performed on the resultant mixture: addition of enzyme AR2000 at a concentration of 30 mg/L, skin contact for 5 hours, squeezing, clarification, and concentration.

### (2) Method using the fruit skin (water extraction)

Experimental section 3: To the grape skin, water at 2.5 times of the skin (weight ratio) was added. Then, the resultant mixture was heated to 85°C and then cooled to 50°C. A sequence of the following operations was performed on the resultant mixture: skin contact for 5 hours, squeezing, clarification, and concentration.

Experimental section 4: To the grape skin, water at 2.5 times of the skin (weight ratio) was added. Then, the resultant mixture was heated to be 85°C, and then cooled to be 50°C. A sequence of the following operations was performed on the resultant mixture: addition of enzyme AR2000 at the concentration of 30 mg/L, the skin contact was performed for 5 hours, squeezing, clarification, and concentration.

### (3) Comparison section

In addition, two types of commercial products were provided as the comparison section (comparison section 1 and comparison section 2).

### (4) Fermentation test

In addition, the samples of concentrated grape juice for the experimental sections 1 to 4 and the comparison sections 1 and 2 were used to prepare wine. Fermentation was performed as follows. The fruit juice sample described above was diluted to have Brix 20 degrees of sugar content. Thiamine at 1 mg/L, ammonium phosphate at 750 mg/L, and Fermaid K (Lallemand) at 250 mg/L were added as a nutrient source. The yeast was added to be 250 mg/L after re-hydration. The fermentation temperature was set at 20°C.

### Example 2: Relationship between the treatment conditions for manufacturing process of concentrated grape juice and the content of monoterpene alcohol glycoside

The quantification was performed on the monoterpene alcohol glycoside (bonded type monoterpene alcohol) in the samples of concentrated grape juice for the experimental sections 1 to 4 and the comparison sections 1 and 2 obtained in Example 1.

In Table 2 below, a total amount of glycosides of linalool, α-terpineol, β-citronellol, nerol, and geraniol is listed as the total amount (nM) of monoterpene alcohol glycoside together with the treatment conditions used for the manufacturing process of the concentrated grape juice. In Table 2, the total amounts (nM) of each of monoglycoside type and diglycoside type contained in the total amount of monoterpene alcohol glycoside are also listed. In Table 2, the results of the sensory evaluation performed on the wine obtained by the fermentation of the samples of concentrated grape juice are also described. In order to enable comparison of samples having different concentrations to each other, the numerical value indicating the content was converted to a numerical value at a concentration at which the sugar content of the sample is Brix 20 degrees (Brix 20 equivalence) which is a standard sugar content used in brewing wine.
[Table 2]

**Table 2: The effect of treatment steps on the content of monoterpene alcohol glycoside**

| Experimental section | Experimental section 1 | Experimental section 2 | Experimental section 3 | Experimental section 4 | Comparison section 1 | Comparison section 2 |
|---|---|---|---|---|---|---|
| Variety | Varieties of Muscat of Alexandria | | | | Commercial product A | Commercial product B |
| Fruit juice treatment | Squeezing (skin + fruit juice) | | Water extraction (skin + water) | | | |
| Heat treatment (85°C) | ○ | ○ | ○ | ○ | | |
| Enzyme treatment | - | ○ | - | ○ | | |
| Monoglycoside (nM) | 3.8 | 9.5 | 6.7 | 15.3 | 1.9 | 0.8 |
| Diglycoside (nM) | 28.2 | 19.9 | 53.3 | 32.6 | 3.1 | 5.2 |
| Total amount (nM) of monoterpene alcohol glycoside | 32.0 | 29.5 | 59.9 | 47.9 | 5.0 | 6.0 |
| Sensory evaluation for wine obtained by fermenting concentrated fruit juice of each experimental section (n=5) | Δ | ○ | ○ | ○ | × | × |

| | | | | | | |
|---|---|---|---|---|---|---|
| Note: The amount of glycoside is expressed in Brix 20 equivalence Criteria of the sensory evaluation: ○: strong muscat-like aroma is felt, Δ: slightly strong muscat-like aroma is felt, ×: felt muscat aroma is similar to muscat aroma obtained by a normal method | | | | | | |

As shown in Table 2, it was found that the total amount of monoterpene alcohol glycoside in the experimental sections was increased in comparison with the total amount in the comparison sections (commercial concentrated fruit juice). For example, in comparison with the comparison sections, the total amount was about 5 times in the experimental sections 1 and 2, about 10 times in the experimental section 3, and about 8 times in the experimental section 4. A comparison of the experimental sections 1 and 2, in which fruit juice and fruit skin were mixed, with the experimental sections 3 and 4, in which only fruit skin was used, showed that the method using only fruit skin caused the amount of the extracted monoterpene alcohol glycoside to be increased about 2 times. The experimental section 3 (using fruit skin but no enzyme) had the maximum total amount of monoterpene alcohol glycoside.

In the experimental section, heating of the liquid containing fruit skin caused the increase in the amount of monoterpene alcohol glycoside. This shows that the muscat skin contains much bonded type terpene alcohols.

The results of the sensory evaluation on wine showed that muscat aroma in the comparison sections 1 and 2 was felt similar to that of a sample manufactured by a normal method, but that the muscat aroma in the experimental sections 1 to 4 was felt strong, and that muscat aroma in the experimental sections 2 to 4 was especially felt strong.

When the sensory evaluation results are referenced against quantitative values, it is considered for the total amount of monoterpene alcohol glycoside in concentrated grape juice, that 7 nM or more is preferable, 15 nM or more is more preferable, and 25 nM or more is furthermore preferable expressed in Brix 20 equivalence. In addition, it is considered that the amount of monoglycoside type monoterpene alcohol glycoside in concentrated grape juice is preferably 2 nM or more, and more preferably 5 nM or more when expressed in Brix 20 equivalence.

### Example 3: Relationship between the treatment conditions in manufacturing process of concentrated grape juice and the content of monoglycoside type monoterpene alcohol glycoside

The quantification was performed on the monoglycoside type monoterpene alcohol glycoside (bonded type monoterpene alcohol) in the samples of concentrated grape juice for the experimental sections 1 to 4 and the comparison sections 1 and 2 obtained in Example 1.

In Table 3 below, the content (nM) and the total amount (nM) of each monoglycoside glycoside of linalool, α-terpineol, β-citronellol, nerol, and geraniol and the treatment conditions used for the manufacturing process of the concentrated grape juice are listed. In order to compare the results among samples having different concentrations, the numerical value indicating the content was converted to a numerical value (value expressed in Brix 20 equivalence) with respect to the concentration corresponding to the conditions under which the sugar content of the sample becomes Brix 20 degrees which is a normal sugar content used for brewing wine.
[Table 3]

**Table 3: The effect of treatment steps on the monoglycoside composition of monoterpene alcohol glycoside (nM)**

| Experimental section | Experimental section1 | Experimental section2 | Experimental section3 | Experimental section4 | comparison section1 | comparison section2 |
|---|---|---|---|---|---|---|
| Variety | Muscat of Alexandria | | | | Commercial product A | Commercial product B |
| Fruit juice treatment | Squeezing (skin + fruit juice) | | Water extraction (skin + water) | | | |
| Heating treatment (85°C) | ○ | ○ | ○ | ○ | | |
| Enzyme treatment | - | ○ | - | ○ | | |
| Linalyl glycoside (nM) | 1.8 | 2.0 | 3.9 | 4.0 | 0.3 | 0.2 |
| α-terpinyl glycoside (nM) | 0.5 | 0.6 | 0.9 | 0.9 | 0.1 | 0.0 |
| β-citronellyl glycoside (nM) | 0.3 | 0.2 | 0.6 | 1.5 | 0.3 | 0.3 |
| Neryl glycoside (nM) | 0.2 | 1.6 | 0.3 | 1.7 | 0.3 | 0.1 |
| Geranyl glycoside (nM) | 0.9 | 5.2 | 0.9 | 7.2 | 0.9 | 0.2 |
| Total amount of monoglycoside (nM) | 3.8 | 9.5 | 6.7 | 15.3 | 1.9 | 0.8 |

| | | | | | | |
|---|---|---|---|---|---|---|
| Note: The amount of glycoside is expressed in Brix 20 equivalence | | | | | | |

As shown in Table 3, it was found that the total amount of monoglycoside type monoterpene alcohol in the experimental sections was increased, and the total amount of monoglycoside type monoterpene alcohol especially in the experimental sections 2, 3, and 4 was markedly increased, in comparison with the total amount in the comparison sections (commercial concentrated fruit juice). For example, in comparison with the comparison section 1, the total amount was about 5 times in the experimental section 2, about 3 times in the experimental section 3, and about 8 times in the experimental section 4. In comparison with the comparison section 2, the total amount was about 12 times in the experimental section 2, about 9 times in the experimental section 3, and about 20 times in the experimental section 4. When results are studied on the basis of each manufacturing method, with respect to the method utilizing the fruit juice and fruit skin, the extracted amounts of geraniol and nerol in the experimental section 2 in which the enzymatic treatment was performed, the amounts of geraniol and nerol were respectively increased 3 times compared to the experimental section 1 in which no enzymatic treatment was performed. With respect to the method using fruit skin, the extracted amounts of geraniol and nerol in the experimental section 4 in which the enzymatic treatment was performed were respectively increased 2.5 times compared to the experimental section 3 in which no enzymatic treatment was performed. This suggests the possibility that the amounts of geraniol and nerol can be increased by the enzymatic treatment.

In addition, the numerical values shown as the mol concentration in Table 3 are expressed by the concentration by mass and shown in Table 4. In Table 4, the concentration by mass is based on the mass of monoterpene alcohol itself, but not based on the mass of glycoside of monoterpene alcohol.
[Table 4]

**Table 4: The effect of treatment steps on the monoglycoside composition of monoterpene alcohol glycoside (ppb)**

| Experimental section | Experimental section1 | Experimental section2 | Experimental section3 | Experimental section4 | comparison section1 | comparison section2 |
|---|---|---|---|---|---|---|
| Variety | Muscat of Alexandria | | | | Commercial product A | Commercial product B |
| Fruit juice treatment | Squeezing (skin + fruit juice) | | Water extraction (skin + water) | | | |
| Heating treatment (85°C) | ○ | ○ | ○ | ○ | | |
| Enzyme treatment | - | ○ | - | ○ | | |
| Linalool (ppb) | 284 | 313 | 608 | 623 | 48 | 31 |
| α-terpineol (ppb) | 76 | 86 | 146 | 140 | 14 | 6 |
| β-citronellol (ppb) | 50 | 26 | 99 | 235 | 48 | 48 |
| Nerol (ppb) | 38 | 248 | 39 | 255 | 51 | 9 |
| Geraniol (ppb) | 142 | 796 | 139 | 1106 | 138 | 24 |
| Total amount of monoterpene alcohol (ppb) | 590 | 1469 | 1031 | 2359 | 300 | 117 |

| | | | | | | |
|---|---|---|---|---|---|---|
| Note: The amount of glycoside is expressed in Brix 20 equivalence | | | | | | |

It is known that the threshold of minimum concentration at which human can taste is 50 ppb for linalool, 400 ppb for α-terpineol, 18 ppb for β-citronellol, 400 ppb for nerol, and 130 ppb for geraniol.

As shown in table 4, it is apparent that linalool, β-citronellol, and geraniol in the experimental sections exceed the thresholds. Thus, it is considered that linalyl glycoside, β-citronellyl glycoside, and geranyl glycoside contribute to the strong muscat aroma in the sample of concentrated grape juice in the experimental sections.

Thus, in view of the sensory evaluation results shown in Table 2 and the quantitative values of linalyl glycoside, β-citronellyl glycoside, and geranyl glycoside shown in Table 3, it is considered preferable for the content of monoglycoside type monoterpene alcohol in the concentrated grape juice that geranyl glycoside is equal to or more than 0.9 nM, linalyl glycoside is equal to or more than 0.4 nM, and β-citronellyl glycoside is equal to or more than 0.2 nM expressed in Brix 20 equivalence. In addition, it is considered for the content of monoglycoside type linalyl glycoside in the concentrated grape juice that, expressed in Brix 20 equivalence, 1.0 nM or more is more preferable, 1.5 nM or more is furthermore preferable, and 2.0 nM or more is moreover preferable.

### Example 4: Relationship between the heating conditions in manufacturing process of concentrated grape juice and the content of monoterpene alcohol glycoside

As the heating conditions for the test, 5 experimental sections were set: room temperature, 45°C, 65°C, 85°C, and 95°C. In each of the experimental sections at 65°C, 85°C, and 95°C, grape berries were crushed and squeezed. After the temperature of the fruit juice containing fruit skin reached the set temperature, it was cooled down to 50°C and then the skin contact was performed for 6 hours. In the experimental section at 45°C, grape berries were crushed and squeezed. After the temperature of the fruit juice containing fruit skin reached the set temperature, the skin contact was performed for 6 hours. In the experimental section at room temperature, grape berries were crushed and squeezed, and then the fruit juice containing fruit skin was directly subjected to the skin contact for 6 hours. In all the experimental sections, squeezing was performed to obtain the fruit juice after the skin contact. The fruit juice was centrifuged and then analyzed.

In Table 5 below, the total amount (nM) of each monoglycoside glycoside of linalool, α-terpineol, β-citronellol, nerol, and geraniol and the set temperature of heat treatment conditions for the manufacturing process of the concentrated grape juice are expressed as the total amount of monoterpene alcohol glycoside (the bonded-type monoterpene alcohol). The numerical value indicating the content was converted to a numerical value (value expressed in Brix 20 equivalence) with respect to the concentration corresponding to the conditions under which the sugar content of the sample becomes Brix 20 degrees which is a normal sugar content used for brewing wine. The results of sensory evaluation for the wine obtained through the fermentation on the sample of concentrated grape juice are also listed.
[Table 5]

**Table 5: The effect of heat treatment on the content of monoterpene alcohol glycoside**

| | Room temperature (20°C) | 45°C | 65°C | 85°C | 95°C |
|---|---|---|---|---|---|
| Total amount of monoterpene alcohol glycoside (nM) | 4.0 | 7.0 | 11.1 | 13.7 | 10.6 |
| Sensory evaluation for wine in which concentrated fruit juice of each Experimental section is fermented (n=5) | × | Δ | ○ | ○ | Δ |

| | | | | | |
|---|---|---|---|---|---|
| Note: The amount of glycoside is expressed in Brix 20 equivalence Criteria of the sensory evaluation: | | | | | |

- ○:: strong muscat-like aroma is felt,
- Δ:: slightly strong muscat-like aroma is felt,
- ×:: felt muscat aroma is similar to muscat aroma obtained by normal method

As shown in Table 5, it was found that increasing the heating temperature caused the amount of monoterpene alcohol glycoside in the fruit juice to be increased. The amount of monoterpene alcohol glycoside was the greatest in the experimental section at 85°C. The amount of monoterpene alcohol glycoside in the experimental section at 85°C was about 3.5 times compared to the amount in the experimental section at room temperature.

In view of Table 5, it is considered that 45 to 95°C is preferable, 65°C to 95oC is more preferable, and about 85°C is furthermore preferable as the preset temperature for the heat treatment in the manufacturing process of concentrated grape juice.

In addition, although the results of the sensory evaluation for wine in Table 5 show that the muscat aroma felt in the experimental section at room temperature was similar to that of the sample manufactured by a normal method, the muscat aroma felt in the other experimental sections was strong and it was especially strong in the experimental section at 65oC and in the experimental section at 85°C. In view of these results, it is considered that 45°C to 95°C is preferable and 65°C to 85°C is more preferable as the preset temperature of the heat treatment in the manufacturing process of the concentrated grape juice. Furthermore, when the sensory evaluation results are referenced against each of the quantitative values, the total amount of monoterpene alcohol glycoside in the concentrated grape juice is preferably 7 nM or more, and further more preferably 11 nM or more is more, expressed in Brix 20 equivalence.

## Claims

1. A grape juice comprising monoterpene alcohol glycoside, wherein a total amount of the monoterpene alcohol glycoside is equal to or more than 7 nM expressed in Brix 20 equivalence.

2. The grape juice according to claim 1, wherein a total amount of a monoglycoside among the monoterpene alcohol glycoside is equal to or more than 2 nM expressed in Brix 20 equivalence.

3. The grape juice according to claim 2, wherein a concentration of geranyl glycoside among the monoglycoside is equal to or more than 0.9 nM, a concentration of linalyl glycoside among the monoglycoside is equal to or more than 0.4 nM, and a concentration of β-citronellyl glycoside among the monoglycoside is equal to or more than 0.2 nM, all expressed in Brix 20 equivalence.

4. A method for manufacturing grape juice in which muscat aroma is emphasized, comprising step (a) and step (b), or comprising step (a), step (b) and step (c):
(a) obtaining fruit skin or fruit skin-containing fruit juice by crushing and squeezing grape berries;
(b) heating a material formed by adding water to the fruit skin obtained in step (a) or the fruit skin-containing fruit juice obtained in step (a), wherein the temperature of the material or the fruit skin-containing fruit juice is elevated to reach 45°C to 95°C to form a mixture;
(c) air-cooling the mixture obtained in step (b) and subsequently adding an enzyme having a glycosidase activity for diglycoside to the mixture.

5. Grape juice which is manufactured by the method according to claim 4.

6. A beverage which is manufactured from the grape juice according to any of claims 1 to 3 or 5.

7. The beverage according to claim 6, wherein the beverage is a fermented alcoholic beverage.

8. A flavor-imparting agent for imparting muscat aroma, comprising the grape juice according to any of claims 1 to 3 or the grape juice according to claim 5.

9. A beverage, comprising the grape juice according to any of claims 1 to 3, the grape juice according to claim 5, or the flavor-imparting agent according to claim 8.

10. The beverage according to claim 9, wherein the beverage is a fermented alcoholic beverage.
